# EUROPÄISCHE PATENTANMELDUNG

(11) **EP 2 492 592 A2**
(43) Veröffentlichungstag der Anmeldung: **29.08.2012**
(21) Anmeldenummer: 12155706.0
(22) Anmeldetag: 16.02.2012
(51) Int. Cl.: F23D 11/44, F23D 11/00, F23L 15/00

(54) **Ölvormischbrenner**

(30) Priorität: 25.02.2011 DE 102011012493
(71) Anmelder: Robert Bosch GmbH, 70442 Stuttgart (DE)
(72) Erfinder: Rausch, Rainer, 36304 Alsfeld (DE)

(57) **Zusammenfassung**

Die Erfindung betrifft einen Ölvormischbrenner mit einem Brennelement (1), einer Brenneroberfläche (2) auf der äußeren Mantelfläche, einer Verteilkammer (3) unterhalb der Brenneroberfläche (2), einer Öleinspritzvorrichtung (4), einem an ein stromaufwärts angeordnetes Gebläse angeschlossenen Verbrennungsluftkanal (5) sowie einem Luftwärmetauscher für die Vorwärmung der Verbrennungsluft im Bereich der Brenneroberfläche (2).

Aufgabe der Erfindung ist es, bei einem Ölvormischbrenner die Verbrennungsqualität und die Robustheit, besonders im Hinblick auf Modulationsfähigkeit, zu optimieren.

Erfindungsgemäß ist daher vorgesehen, dass mindestens eine Öleinspritzvorrichtung (4) einem Luftwärmetauscher aus mindestens einem Doppelrohrelement (6) mit einem in Reihe durchströmten Innenrohr (7) und einem zu diesem konzentrischen Außenrohr (8) zugeordnet ist.

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche. Bekannt ist dabei bisher eine zentrale Öleinspritzvorrichtung. Um diese herum befindet sich bei den bekannten Ausführungsformen in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern werden der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum als Verteilkammer umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft, um den Ölnebel möglichst vollständig zu verdampfen. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität aber relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Weiterhin sind aus der DE 21 07 514 A eine Vorrichtung zum Heizen mit Infrarotstrahlung und aus der US 1 082 576 A ein Ölbrenner mit flächig unterhalb der Brenneroberfläche angeordneten, abgeschlossenen, flächig durchgehenden Kanälen zur Luftvorwärmung bekannt. Aus diesen nicht unterbrochenen Kanälen wird in beiden Fällen die vorgewärmte Luft zum Zentrum mit der Brennstoffzufuhr zurück geleitet und dort mit Brennstoff vermischt. Von diesem Zentrum aus tritt das Gemisch in die Brennzone ein, ohne wieder in die Nähe des zur Vorwärmung dienenden Luft-Strömungsweges zu kommen.

Der Erfindung liegt daher die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Der Ölvormischbrenner ist **dadurch gekennzeichnet, dass** mindestens eine Öleinspritzvorrichtung einem Luftwärmetauscher aus mindestens einem Doppelrohrelement mit einem in Reihe durchströmten Innenrohr und einem zu diesem konzentrischen Außenrohr zugeordnet ist. Dabei ist der Luftwärmetauscher oberhalb der Brenneroberfläche angeordnet und besteht aus mehreren symmetrisch über den Umfang verteilten, sich achsparallel zum Brennelement, mindestens über einen Teil dessen Länge erstreckenden und parallel durchströmten Doppelrohrelementen.

Jedes Doppelrohrelement weist an der Stirnseite des freien Endes eine Umlenkzone als Verbindung zwischen Innenrohr und einem zwischen Innenrohr und Außenrohr gebildeten Ringraum auf. Weiterhin ist jedes Doppelrohrelement mit der Eintrittsseite des Innenrohres mit dem Verbrennungsluftkanal verbunden und jeweils einer Öleinspritzvorrichtung zugeordnet. Dabei ist der Strahl jeweils einer einem Innenrohr des Doppelrohrelementes zugeordneten Öleinspritzvorrichtung vorzugsweise direkt in dessen Einmündungsbereich gerichtet.

Anschließend gelangt das Ölnebel-/Verbrennungsluft-Gemisch jeweils nach Verlassen des Innenrohres in einer Umlenkzone an der Stirnseite des freien Endes in den zwischen Innenrohr und Außenrohr gebildeten Ringraum, strömt in Richtung öleinspritzvorrichtungsnaher Stirnseite zurück und gelangt dort als vorgewärmter Öldampf in einen Ringraum, welcher in die Verteilkammer einmündet und vorzugsweise mit allen Doppelrohrelementen und Öleinspritzvorrichtungen auf dem Kreisumfang in Verbindung steht.

Vorteilhafterweise mündet der für den Öldampf vorgesehene Ringraum um die zentrale Ausmündung des Verbrennungsluftkanals ebenfalls in die Verteilkammer aus. Damit wird im Austrittsbereich mit dem Öldampf ein Mantelstrom um den Verbrennungsluftstrom im Zentrum gebildet.

In einer bevorzugten Ausführungsform der Erfindung ist eine Luftklappe im Verbrennungsluftkanal vorgesehen, welche die Verbrennungsluft wahlweise über einen ersten, ein elektrisches Heizelement aufweisenden Kanal für die Startphase oder über einen zweiten Kanal für den stationären Betrieb leitet. Dabei mündet der erste Kanal in einem Ringraum aus, welcher die Eintrittsseite des Innenrohres eines Doppelrohrelementes und die jeweils zugeordnete Öleinspritzvorrichtung übergreift. Bei mehreren Doppelrohrelementen und Öleinspritzvorrichtungen auf dem Kreisumfang sind alle Komponenten in diesem Ringraum miteinander verbunden. Im Startbetrieb wird die Verbrennungsluft mit dem elektrischen Heizelement erhitzt und dem Verdampferbereich, also insbesondere dem Luftwärmetauscher und der stromabwärts nachfolgenden Verteilkammer, zugeführt. Dabei findet die Verdampfung des Öls nicht an der Wandung sondern in der heißen Verbrennungsluft statt.

Der zweite Kanal für den stationären Betrieb mündet zentral in die Verteilkammer aus. Vorzugsweise stehen der erste und der zweite Kanal über mindestens eine Öffnung im Ringraum in Verbindung, so dass im stationären Betrieb immer mindestens ein Teilstrom der Verbrennungsluft aus dem zweiten Kanal abgezweigt wird und durch den Luftwärmetauscher strömt. Damit wird der Austrag des Öldampfes gewährleistet. Dieser Teilstrom kann durch eine oder auch mehrere über den Umfang verteilte Öffnungen dem Ringraum zugeführt werden. Auch ist im stationären Betrieb alternativ denkbar, den Teilstrom der Verbrennungsluft über den ersten Kanal für die Startphase zuzuführen und das elektrische Heizelement abgeschaltet zu lassen. Die Regelung des Teilstromes sowie der Verbrennungsluftzufuhr in Start- und Stationärbetrieb übernimmt eine Luftklappe.

In einer weiteren bevorzugten Ausführungsform weisen Innenrohr und/oder Außenrohr Turbulenz erzeugende Oberflächen, eine Profilierung und/oder Oberflächen vergrößernde Elemente auf, um den Wärmeübergang zu verbessern und insbesondere die wandnahe Strömung aufzubrechen. Dazu sind das Innenrohr und/oder das Außenrohr mit Profilierungen und/oder Sicken zur Turbulenzerzeugung versehen, welche vorzugsweise spiralförmig auf der Rohroberfläche verlaufen. Besonders vorteilhaft ist es dabei, wenn mindestens das Innenrohr auf seiner Außenseite mit Mitteln zur Beeinflussung der Strömung im umgebenden Ringspalt versehen ist.

Vorzugsweise sind die Durchmesser von Innenrohr und Außenrohr so bemessen, dass der freie Querschnitt im Verlauf des Strömungsweges der Verbrennungsluft mindestens gleich bleibt oder zunimmt. Damit wird eine Anpassung an das mit der Lufttemperatur steigende Volumen erreicht. Andererseits ist über die Querschnittsgestaltung auch die Strömungsgeschwindigkeit, und somit die Wärmeaufnahmefähigkeit bzw. auch die Wärmebelastung der Außenoberfläche, in den jeweiligen Kanalbereichen gezielt beeinflussbar.

In noch einer weiteren Ausführungsform kann das Innenrohr auch mit mehreren Durchbrechungen in seinem Mantel versehen sein. Diese lassen eine Direktströmung in den umgebenden Ringspalt zu, sorgen im Ringspalt für lokale Turbulenzen und Kühleffekte, und sind im Querschnitt vorzugsweise jeweils mindestens um das Zehnfache kleiner als der Innendurchmesser des Innenrohres.

Weiterhin sieht die Erfindung vor, dass Innenrohr und Außenrohr mindestens punktuell aneinander abgestützt sind. Dabei erfolgt dies insbesondere in der Umlenkzone an der Stirnseite des freien Endes und/oder durch Einbauteile und/oder eine spezielle Ausbildung der Rohrwand, indem diese beispielsweise mit stegartigen Vorsprüngen, Ausstellungen, kleinen Abkantungen im Endbereich oder lokalen Prägungen versehen ist.

Mit den erfindungsgemäßen Maßnahmen werden bei Ölvormischbrennern sowohl die Verbrennungsqualität als auch die Robustheit verbessert. Insbesondere für modulierenden Betrieb ist die erfindungsgemäße Anordnung mit dem integrierten Luftwärmetauscher vorteilhaft. Dies trifft für Brenner mit einem zylindrischen Brennelement genauso zu wie für Flächenbrenner mit einer horizontalen Brenneroberfläche und dem erfindungsgemäßem Aufbau. Die Flamme brennt an bzw. in der Brenneroberfläche, so dass dabei oberhalb davon Energie aus der Flamme ausgekoppelt und zur Erwärmung der Verbrennungsluft genutzt wird. Damit entfällt eine elektrische Luftvorwärmung während des stationären Brenner-Betriebszustandes und das System läuft autark ohne weitere externe Zuführung von Heizenergie. Dies wirkt sich positiv auf die Energiebilanz des Brenners aus.

Ein bedeutender Vorteil der erfindungsgemäß integrierten Luftvorwärmungsfunktion ist, dass ein sehr langer Strömungsweg für den zur Ölverdampfung notwendigen Wärmeintrag und als Mischstrecke zur Verfügung steht. Außerdem ist mit zunehmender Brenneroberfläche, beispielsweise bei einem Brennelement für größere Leistungsbereiche, auch die Wärmetauscheroberfläche in gleichem Maße erweiterbar, indem einfach längere Doppelrohrelemente zum Einsatz kommen. Damit bleibt die angestrebte Lufttemperatur konstant. Jedes Rohr wird durch seine spezifische Leistungsdichte und die Rohr-Anzahl in Abhängigkeit von der Gesamtleistung definiert. Außer als an den Doppelrohrelementen des Luftwärmetauschers sind dadurch an der Peripherie, insbesondere an der mindestens einen Öleinspritzvorrichtung bzw. sonstigen Brennerkomponenten keine konstruktiven Änderungen für die Darstellung unterschiedlicher Brenner-Leistungsgrößen nötig. Der sonstige Brenneraufbau bleibt somit genauso erhalten wie Anforderungen an den umgebenden Feuerraum.

Mit dem erfindungsgemäßen Luftwärmetauscher soll Verbrennungsluft in allen Brenner-Betriebspunkten mit einer Mindesttemperatur von ca. 350 °C bereitgestellt werden. Dabei ist zu beachten, dass unter Einhaltung die maximal zulässigen Oberflächentemperatur am Luftwärmetauscher die Länge von Rohrelementen herkömmlicher Bauart, d. h. in Form von glatten, U-förmigen Wärmetauscher-Bögen, sowie die Anzahl der Rohre nicht beliebig gesteigert werden kann. Neben den Grenzen in der Einhaltung des maximalen Biegeradius steigen mit längeren herkömmlichen Rohren ansonsten auch die Materialtemperaturen weiter an und bringen eine Gefahr des Durchbiegens mit sich.

Im Gegensatz dazu ist erfindungsgemäß aber eine Längenausdehnung aufgrund thermischer Belastung möglich, da jedes Doppelrohrelement des Luftwärmetauschers nur einseitig eingespannt ist. Größere, einem Brennelement entsprechend angepasste Längen bzw. Auskragungen von Doppelrohrelementen lassen sich durch gegenseitige Abstützung von Innen- und Außenrohr realisieren.

Mit der Erfindung wird der Einsatz profilierter Rohre, welche den Wärmeübergang begünstigen und für eine geringe, Material schonende Oberflächentemperatur sorgen, erst möglich. Besonders das Innenrohr kann als Turbulenzanreger bzw. Strömungsbrecher fungieren. Generell lässt sich mit den erfindungsgemäßen Doppelrohrelementen eine gegenüber dem Stand der Technik höhere Packungsdichte auf einem Teilkreis im Bereich der Brenneroberfläche erzielen. Außerdem besitzen diese Vorteile in Bezug auf Druckverlust und Skalierbarkeit. Vom Prinzip her wird erfindungsgemäß mit einem Doppelrohrelement ein Gegenstromwärmetauscher realisiert, denn die Luftströmung in den beiden Kanälen läuft entgegensetzt.

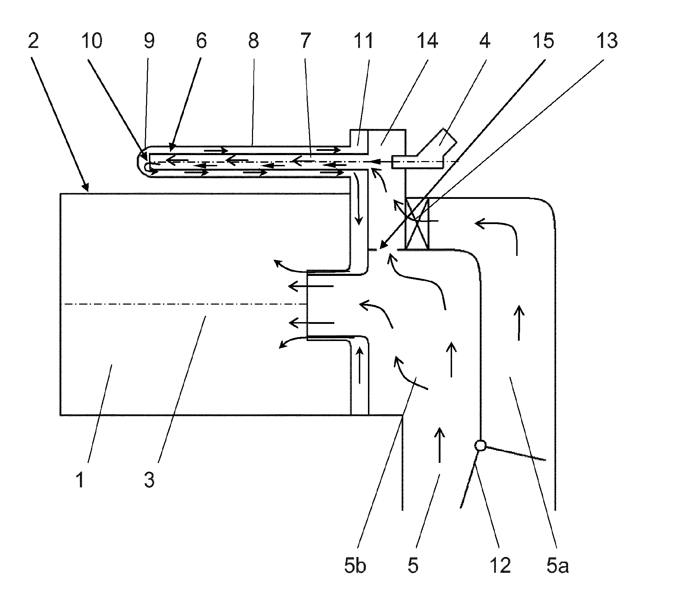

Die Zeichnung stellt ein Ausführungsbeispiel der Erfindung dar. Es zeigt in einer einzigen Figur einen Ölvormischbrenner im Längsschnitt.

Der Ölvormischbrenner besteht im Wesentlichen aus einem zylindrischen Brennelement 1, mit einer Brenneroberfläche 2 auf der äußeren Mantelfläche, einer Verteilkammer 3 unterhalb der Brenneroberfläche 2, einer Öleinspritzvorrichtung 4 und einem an ein nicht dargestelltes, stromaufwärts angeordnetes Gebläse angeschlossenen Verbrennungsluftkanal 5.

Das Brennelement 1 besitzt zur Vorwärmung der Verbrennungsluft im Bereich oberhalb der Brenneroberfläche 2 einen Luftwärmetauscher, welcher aus mehreren, symmetrisch über den Umfang verteilten, parallel durchströmten Doppelrohrelementen 6 mit einem in Reihe durchströmten Innenrohr 7 und einem zu diesem konzentrischen Außenrohr 8 besteht.

Jedes Doppelrohrelement 6 ist an der Stirnseite des freien Endes mit einer Kappe 9 verschlossen, so dass eine strömungsgünstige Umlenkzone 10 als Verbindung zwischen Innenrohr 7 und einem zwischen diesem und dem Außenrohr 8 gebildeten Ringraum 11 aufweist.

Jeweils einem sich achsparallel zum Brennelement 1 erstreckenden Doppelrohrelement 6 des Luftwärmetauschers ist eine Öleinspritzvorrichtung 4 zugeordnet, so das sich eine symmetrische Verteilung auf einem außerhalb der Brenneroberfläche 2 liegenden Teilkreis ergibt.

Jedes Doppelrohrelement 6 ist mit der Eintrittsseite des Innenrohres 7 mit dem Verbrennungsluftkanal 5 verbunden, wobei das Ölnebel-/Verbrennungsluft-Gemisch jeweils nach Verlassen des Innenrohres 7 in die Umlenkzone 10 an der Stirnseite des freien Endes in einen zwischen Innenrohr 7 und Außenrohr 8 gebildeten Ringraum gelangt, in Richtung öleinspritzvorrichtungsnaher Stirnseite zurück strömt und dort als vorgewärmter Öldampf in einen Ringraum 11 gelangt, welcher in die Verteilkammer 3 einmündet. Dabei mündet der für den Öldampf vorgesehene Ringraum 11 ringsum um die zentrale Ausmündung des Verbrennungsluftkanals 5 ebenfalls in die Verteilkammer 3 aus, so dass Verbrennungsluft- und Öldampf-Strömung intensiv vermischt werden. Dieser Ringraum 11 bildet die zur Brenneroberfläche bzw. zum heißen Bereich des Brennelementes 1 gerichtete Vorderseite der gesamten Luftführungsanordnung und wird daher ebenfalls vorteilhafterweise mit Wärme beaufschlagt.

Im Verbrennungsluftkanal 5 ist eine Luftklappe 12 angeordnet, welche die Verbrennungsluft wahlweise über einen ersten, ein elektrisches Heizelement 13 aufweisenden Kanal 5a für die Startphase oder über einen zweiten Kanal 5b' für den stationären Betrieb leitet. Der erste Kanal 5a mündet in einem weiteren Ringraum 14 aus, welcher jeweils die Eintrittsseite des Innenrohres 7 eines Doppelrohrelementes 6 und die jeweils zugeordnete Öleinspritzvorrichtung 4 übergreift. Der zweite Kanal 5b mündet im Zentrum der Verteilkammer 3 aus, wobei der erste und der zweite Kanal 5a, 5b über mindestens eine Öffnung 15 im Ringraum 14 in Verbindung stehen, so dass im stationären Betrieb über den Kanal 5b immer mindestens ein Teilstrom der Verbrennungsluft durch den Luftwärmetauscher strömt.

## Patentansprüche

1. Ölvormischbrenner mit einem Brennelement (1), einer Brenneroberfläche (2) auf der äußeren Mantelfläche, einer Verteilkammer (3) unterhalb der Brenneroberfläche (2), einer Öleinspritzvorrichtung (4), einem an ein stromaufwärts angeordnetes Gebläse angeschlossenen Verbrennungsluftkanal (5) sowie einem Luftwärmetauscher für die Vorwärmung der Verbrennungsluft im Bereich der Brenneroberfläche (2),
**dadurch gekennzeichnet, dass** mindestens eine Öleinspritzvorrichtung (4) einem Luftwärmetauscher aus mindestens einem Doppelrohrelement (6) mit einem in Reihe durchströmten Innenrohr (7) und einem zu diesem konzentrischen Außenrohr (8) zugeordnet ist.

2. Ölvormischbrenner nach Anspruch 1,
**dadurch gekennzeichnet, dass** der Luftwärmetauscher oberhalb der Brenneroberfläche (2) angeordnet ist und aus mehreren symmetrisch über den Umfang verteilten, sich achsparallel zum Brennelement (1), mindestens über einen Teil dessen Länge erstreckenden und parallel durchströmten Doppelrohrelementen (6) besteht.

3. Ölvormischbrenner nach den Ansprüchen 1 oder 2,
**dadurch gekennzeichnet, dass** jedes Doppelrohrelement (6) an der Stirnseite des freien Endes eine Umlenkzone (10) als Verbindung zwischen Innenrohr (7) und einem zwischen Innenrohr (7) und Außenrohr (8) gebildeten Ringraum (11) aufweist.

4. Ölvormischbrenner nach einem der Ansprüche 1 bis 3,
**dadurch gekennzeichnet, dass** jedes Doppelrohrelement (6) mit der Eintrittsseite des Innenrohres (7) mit dem Verbrennungsluftkanal (5) verbunden und jeweils einer Öleinspritzvorrichtung (4) zugeordnet ist, wobei das Ölnebel-/Verbrennungsluft-Gemisch jeweils nach Verlassen des Innenrohres (7) in einer Umlenkzone (10) an der Stirnseite des freien Endes in den zwischen Innenrohr (7) und Außenrohr (8) gebildeten Ringraum gelangt, in Richtung öleinspritzvorrichtungsnaher Stirnseite zurück strömt und dort als vorgewärmter Öldampf in einen Ringraum (11) gelangt, welcher in die Verteilkammer (3) einmündet.

5. Ölvormischbrenner nach einem der Ansprüche 1 bis 4,
**dadurch gekennzeichnet, dass** der für den Öldampf vorgesehene Ringraum (11) um die zentrale Ausmündung des Verbrennungsluftkanals (5, 5b) ebenfalls in die Verteilkammer (3) ausmündet.

6. Ölvormischbrenner nach einem der Ansprüche 1 bis 5,
**dadurch gekennzeichnet, dass** im Verbrennungsluftkanal (5) eine Luftklappe vorgesehen ist, welche die Verbrennungsluft wahlweise über einen ersten, ein elektrisches Heizelement (13) aufweisenden Kanal (5a) für die Startphase oder über einen zweiten Kanal (5b) für den stationären Betrieb leitet, dass der erste Kanal (5a) in einem Ringraum (14) ausmündet, welcher die Eintrittsseite des Innenrohres (7) eines Doppelrohrelementes (6) und die jeweils zugeordnete Öleinspritzvorrichtung (4) übergreift, und dass der zweite Kanal (5b) zentral in die Verteilkammer (3) ausmündet.

7. Ölvormischbrenner nach einem der Ansprüche 1 bis 6,
**dadurch gekennzeichnet, dass** der erste und der zweite Kanal (5a, 5b) über mindestens eine Öffnung (15) im Ringraum (14) in Verbindung stehen, so dass im stationären Betrieb immer mindestens ein Teilstrom der Verbrennungsluft durch den Luftwärmetauscher strömt.

8. Ölvormischbrenner nach einem der Ansprüche 1 bis 7,
**dadurch gekennzeichnet, dass** der Strahl jeweils einer einem Innenrohr (7) des Doppelrohrelementes (6) zugeordneten Öleinspritzvorrichtung (4) in dessen Einmündungsbereich gerichtet ist.
